# EUROPÄISCHE PATENTSCHRIFT

(11) **EP 0 564 056 B1**
(45) Veröffentlichungstag und Bekanntmachung des Hinweises auf die Patenterteilung: **29.10.1997**
(21) Anmeldenummer: 93250050.7
(22) Anmeldetag: 16.02.1993
(51) Int. Cl.: F27D 17/00, C21C 5/52, C21C 5/40, F27B 3/22, F27B 3/08

(54) **Verfahren und Vorrichtung zur Behandlung der Abgase eines Lichtbogenofens**
Process and installation for the exhaust gas handling of an arc furnace
Procédé et installation pour le traitement des gaz d'échappement d'un four à arc

(30) Priorität: 23.03.1992 DE 4209765
(43) Veröffentlichungstag der Anmeldung: 06.10.1993
(73) Patentinhaber: MANNESMANN Aktiengesellschaft, 40027 Düsseldorf (DE)
(72) Erfinder: Becker, Heinrich, W-4130 Moers (DE)
(74) Vertreter: Meissner, Peter E., Dipl.-Ing.

(56) Entgegenhaltungen:
- EP-A- 0 082 091
- EP-A- 0 167 515
- DE-B- 1 090 696
- FR-A- 1 067 882
- FR-A- 2 010 512
- US-A- 3 164 658
- US-A- 4 005 252
- PATENT ABSTRACTS OF JAPAN vol. 11, no. 259 (C-441)(2706) 21. Juli 1987 & JP-A-62 60 812 (DAIDO STEEL CO) 17. März 1987

## Beschreibung

Die Erfindung betrifft einen Lichtbogenofen zum Schmelzen von Metallen.

Zur Minderung der Umweltbelastung werden regelmäßig Schmelzöfen mit Absaugvorrichtungen versehen. So ist aus der DE-AS 19 28 501 ein Lichtbogenofen bekannt, bei dem am Ofendeckel eine Absaugleitung vorgesehen ist, die Stell- und Drosseleinrichtungen aufweist, mit denen die Absaugvorrichtung auf die Betriebsvorgänge im Lichtbogenofen, nämlich Schmelzen, Frischen, Legieren und Entschlacken eingestellt werden kann. Ein Teil der im Ofen auftretenden Rauchgase durchströmt entsprechend der Thermik die Möllersäule und wird unterhalb des Deckels bei nicht nennenswertem Unterdruck abgesaugt.

Wird in einem solchen Lichtbogenofen Schrott eingeschmolzen, der nicht nur sogenannten Kernschrott, sondern auch eine Fülle von Verunreinigungen beispielsweise in Form von Lacken und Kunststoffen, Ölen und Fetten enthält, so gelangen diese Stoffe als Gas, Dämpfe oder Stäube in die Absaugvorrichtung. Hier sind aufwendige Nachbehandlungseinrichtungen wie Nachverbrennungskammern mit Fremdbeneizung, Staubaufbereitungs- und Staubentgiftungsanlagen vorgesehen, bevor eine Abführung der Abgase, die regelmäßig in einem Filtersystem zu reinigen sind, in die Atmosphäre möglich ist. Diese Nachbehandlungseinrichtungen erfordern einen bedeutenden Energieaufwand.

So ist aus der DE-OS 38 27 086 ein Verfahren und eine Vorricntung zur thermischen Entkontaminierung von Filterstäuben und anderen Reststoffen bekannt, bei denen das Material zur Entfernung von evtl. enthaltenen Dioxinen und Furanen sowie zur Verhinderung einer evtl. Auslaugung enthaltener Schwermetalle in einen induktiv beheizten Tiegelofen eingebracht wird. In diesem Tiegelofen wird bei Temperaturen von 1400 bis 1600 Grad Celsius der Staub eingeschmolzen, die flüssige Phase ausgetragen und in einem Wasserbad abgeschreckt. Gleichzeitig wird die sich bildende Gasphase über eine Hochtemperaturstrecke von mindestens 1200 Grad Celsius gefahren und anschließend das Abgas über einen Einspritzkühler schockartig abgekühlt und die Feststoffe in einem nachgeschalteten Hochleistungsentstauber abgeschieden.

Bei diesem aufwendigen Verfahren wird in nachteiliger Weise erst giftenthaltender Staub erzeugt und anschließend behandelt.

Aus der EP-A 0 167 515 ist ein Lichtbogenofen zum Schmelzen von Metallen bekannt, der aus einem Gefäßunterteil und einem Gefäßoberteil besteht, das mit einem Deckel verschlossen ist. Die vom Durchmesser des Kühlmantels des rohrförmigen Gefäßoberteils umfaßte Grundfläche ist dabei kleiner als eine mindestens an einer Seite auskragende Fläche des mit einer feuerfesten Auskleidung versehenen Gefäßunterteils, wobei eine die Grundfläche des Kühlmantels überkragende Ringteilfläche des Gefäßunterteils mit einer Abdeckung verschlossen ist.

Ferner ist aus der US 3,164,658 ein Lichtbogenofen bekannt, bei dem durch zwischen den Elektroden und dem Deckel belassene Schlitze komprimiertes Gas eingeführt werden kann. Dieses monoxide oder inerte Gas soll den Rauch im Ofenraum verdrängen

Die Erfindung hat sich das Ziel gesetzt, einen Lichtbogen ofen zum Schmelzen von Metallen so aus zu bilden, dgl mit einfachen Mitteln in einem einstufigen Verfahren umweltbelastende Giftstoffe, insbesondere Dioxine und Furane, beseitigt sowie unangenehme Gerüche vermieden werden.

Gelost wird diese Aufgabe erfindungsgemaß durch die Gestaltung des Ofens entsprechend dem Anspruch 1. In diesem Ofen werden die im Ofengefäß befindlichen Gase, Stäube und Dämpfe während des Schmelzvorganges entgegen ihrer thermischen Strömungsrichtung durch den sich in einem Lichtbogenofen befindlichen Möller geführt, mit der Schmelze in Kontakt gebracht und anschließend im Bereich zwischen Ober- und Untergefäß des Lichtbogenofens abgesaugt. Durch den Kontakt mit der Schmelze werden die Rauchgase einer Temperatur von ca. 1600 Grad Celsius ausgesetzt. Hierbei werden die Dioxine und Furane zerstört, da Kohlenwasserstoff und organische Schadstoffe sofort und vollständig in die Einzelelemente zerlegt werden. Darüber hinaus löst der flüssige Stahl begierig den Sauerstoff, so daß evtl. Beimengungen der Rauchgase reduziert werden. Elemente, die sich nicht im Stahl auflösen und die auch nicht oxidiert werden, gehen bei diesen hohen Temperaturen in die Gasphase. Die entgifteten Abgase lassen sich in den entsprechenden Filtersystemen relativ leicht reinigen.

In Lichtbogenöfen wird in der überwiegenden Zahl der Fälle Schrott eingeschmolzen. Gegen Ende des Schmelzvorganges, wenn alle schädlichen Schrottbegleitstoffe verbrannt sind, werden die Rauchgase über den Ofendeckel abgesaugt, d.h. es befindet sich eine Umschaltung der Absaugung vom Gefäßunterteil zum Ofendeckelstand.

Das Gefäßoberteil weist ein Volumen auf, daß mindestens eine Zweikorbchargierung zulässt. Zum einen hat dies den Vorteil, daß der Schmelzprozeß seltener durch den Chargiervorgang behindert wird. Darüber hinaus steht das erhöhte Ofengefäß nun als Verbrennungsraum zur Nachverbrennung von CO zu CO2 zur Verfügung, was beispielsweise bei einem Ofenbetrieb mit schäumender Schlacke von ganz besonderer Bedeutung ist.

Durch Zusatzbrenner am Gefäßoberteil können insbesondere fossile Brennstoffe eingebracht werden.

Die Gasführung von oben nach unten durch die Schrottsäule bewirkt, daß das Temperaturprofil innerhalb des Schmelzaggregates vergleichmäßigt wird, was durch die mittels Zusatzbrenner eingebrachte Energie zur Schrotterwärmung außehalb des Brennerbereiches noch gesteigert wird.

Die Behandlung der Gase, Dämpfe und Stäube erfolgt bei niedrigstem Energiebedarf, da lediglich der Druckverlust der Schrottsäule und die Umkehrung der natürlichen Thermik durch zusätzliche Gebläseleistung aufgebracht werden muß. Die Zuluftmenge wird dabei im Bereich der Deckeldichtung zwischen Gefäßoberteil und Deckel angesaugt. Zur Regelung der Gasmengen wird dazu der mittels eines Druckfühlers ermittelte Druck im Ofenkopf benutzt.

Eine Besonderheit besteht darin, zusätzlich Gase in den Ofenkopf einzubringen, die von unabhängigen Gaslieferanten stammen. Es kann sich dabei um Gase handeln, die ihrerseits bereits mit Giftstoffen belastet sind.

Der größte Teil des im Ofen entstehenden Staubes wird allein durch die Schrottsäule im Lichtbogenofen zurückgehalten und gelangt mit dem Schrott zur Flüssigphase, wo eine thermische Entkontaminierung stattfindet.

Ein Beispiel der Erfindung ist in der Zeichnung dargestellt. Es zeigen:
- Fig. 1: das Schema eines Lichtbogenofens mit Absaugeinrichtung,
- Fig. 2: Schnitt S-S durch den Gefäßoberteil. mit einer Absaugung im Bereich des Erkers,
- Fig. 3: Schnitt S-S durch ein Gefäßoberteil, mit einer Absaugung im Bereich der Ofenkippachse,

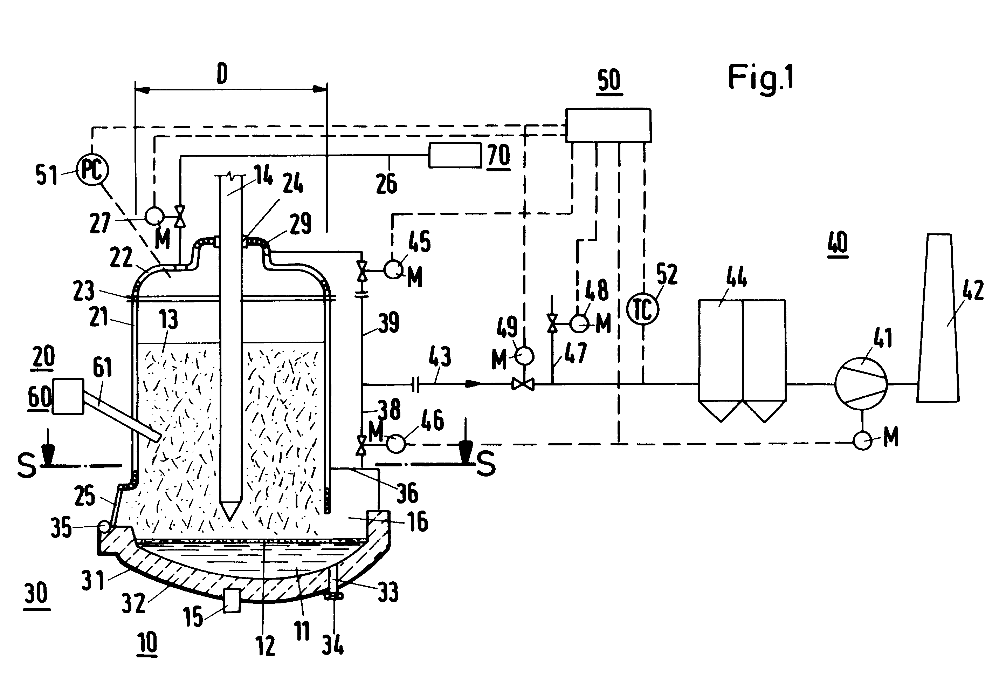

Die Figur 1 zeigt das Ofengefäß 10 des Lichtbogenofens mit dem Gefäßoberteil 20 und dem Gefäßunterteil 30. Im Ofengefäß befindet sich die Schmelze 11, auf der die Schlacke 12 schwimmt und auf der wiederum die Möllersäule 13 ruht.

Das Gefäßoberteit 20 weist einen Kühlmantel 21 auf, in dem im unteren Bereich eine Arbeitstür 25 angeordnet ist. Die Mündung des Gefäßoberteils ist durch einen Deckel 22 geschlossen. Der Deckel 22 weist gefäßwärts eine Deckeldichtung 23 und in seinem Zentrum eine Elektrodendichtung 24 auf. Durch das Zentrum des Deckels, das als Dom 29 ausgestaltet ist, ist mindestens eine in das Gefäß 10 hineinragende Elektrode 14 vorgesehen. Am Deckel ist eine Gaszufuhrleitung 26 vorgesehen, in der eine Stell- und Drosseleinrichtung 27 angeordnet ist. Die Stell- und Drosseleinrichtung 27 steht meßtechnisch mit der Meß- und Regeleinrichtung 50 in Verbindung. Die Gaszufuhrleitung 26 ist an eine nicht näher dargestellte Anlage 70 angeschlossen. Durch die Gaszufuhrleitung 26 wird es möglich, mit Giftstoffen belastete Gase gezielt im Ofengefäß nach dem vorgeschlagenen Verfahren zu behandeln.

Im Bereich des Gefäßoberteils 20 ist weiterhin eine Zufuhreinrichtung von Sekundärenergie 60 angeordnet, die Brenner 61 aufweist, die im wesentlichen in radialer Richtung durch den Kühlemantel 1 ins Ofeninnere hineinragen.

Das Gefäßunterteil 30 besteht im wesentlichen aus einem metallischen Mantel 31, der mit einer feuerfesten Auskleidung 32 ausgestattet ist. Im Gefäßunterteil 30 ist eine Bodenabstichsöffnung 33 vorgesehen, die durch eine Verschlußeinrichtung 34 verschließbar ist.

Bei einem Gleichstromofen ist im Gefäßunterteil 30 mindestens eine Anode 15 vorgesehen.

Am Rand des Gefäßunterteils 30 ist ein Schlackenabstich 35 angeordnet.

Das Gefäßunterteil 30 ragt über das Gefäßoberteil 20 hinaus, wobei der überragende Teil einen Kanal 16 bildet, der durch eine Abdeckung 36 geschlossen ist.

An die Kanalabdeckung 36 ist eine Anschlußleitung 38 vorgesehen, die zusammen mit einer an dem Deckel 22 angeschlossenen Anschlußleitung 39 zu einer Verbindungsleitung 43 vereinigt wird. Die Verbindungsleitung 43 ist ein Teil einer Absaugeinrichtung 40, die einen Filter 44, einen Kamin 42 und ein zwischen beiden angeordneten Gebläse 41 aufweist. In Strömungsrichtung vor dem Filter 44 ist eine Zuluftleitung 47 vorgesehen. Die einzelnen Leitungen 26, 38, 39, 43 und 47 sind durch die Stell- und Drosseleinrichtungen 27, 45, 46, 48 und 49, die jeweils mit einer Meß- und Regeleinrichtung 50 in Verbindung stehen, bezüglich ihrer Gasmenge einstellbar.

Die Meß- und Regeleinrichtung 50 weist darüber hinaus noch einen im Bereich des Deckels 22 angeordneten Druckfühler 51 und unmittelbar vor dem Filter 44 angeordneten Temperaturfühler 52 auf.

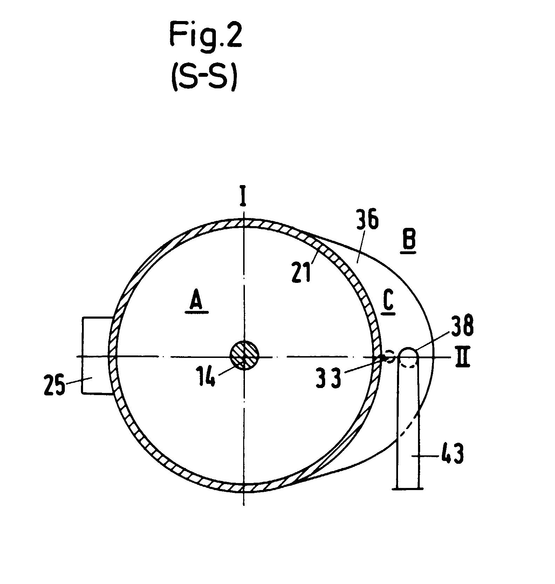

Die Figur 2 zeigt im Schnitt S-S im Bereich des Gefäßoberteils 20 die Elektrode 14 und den Kühlmantel 21. In Draufsicht zu erkennen ist auf der Ofenlängsachse II angeordnete Arbeitstür 25 sowie der Bodenabstich 33.

Die Grundfläche des Gefäßoberteils ist mit A bezeichnet und die Grundfläche des Gefäßunterteils mit B, wobei die Differenz zwischen beiden als Ringteilfläche C benannt ist. Die Ringteilfläche C des Kanals 16 ist mit der Kanalabdeckung 36 versehen, an die die Anschlußleitung 38 angeschlossen ist. Die Anschlußleitung 38 mündet in der Verbindungsleitung 43, ein Teil der nicht weiter dargestellten Absaugeinrichtung 40.

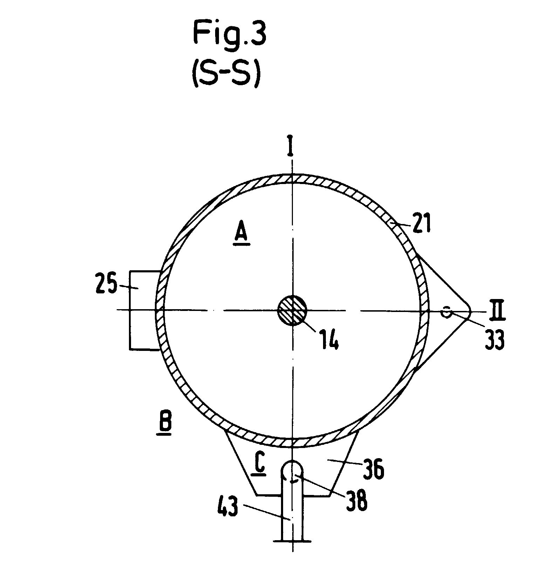

Bei der Figur 3 ist bei gleicher Benennung der Positionen wie in der Figur 2 ein Ofengefäß dargestellt, das eine Auskragung mit der Ringteilfläche C aufweist, die mit einer Abdeckung 36 versehen ist, an die die Anschlußleitung 38 und im weiterführenden Teil die Verbindungsleitung 43 angeschlossen ist. Bei dem in der Figur 3 dargestellten Ofen ist die Ringteilfläche C im Bereich der Ofenkippachse I angeordnet.

### Positionsliste

- 10: Ofengefäß
- 11: Schmelze
- 12: Schlacke
- 13: Möller
- 14: Elektrode/Kathode
- 15: Anode
- 16: Kanal
- 20: Gefäßoberteil
- 21: Kühlmantel

- 22: Deckel
- 23: Deckeldichtung
- 24: Elektrodendichtung
- 25: Arbeitstür
- 26: Gaszufuhrleitung
- 27: Stell- und Drosseleinrichtung
- 29: Dom
- 30: Gefäßunterteil
- 31: metallischer Mantel
- 32: Feuerfestauskleidung
- 33: Bodenabstichsöffnung
- 34: Verschlußöffnung
- 35: Schlackenabstich
- 36: Abdeckung/Kanal
- 38: Anschlußleitung/Kanal
- 39: Anschlußleitung/Dom
- 40: Absaugeinrichtung
- 41: Gebläse
- 42: Kamin
- 43: Verbindungsleitung
- 44: Filter
- 45: Stell- und Drosseleinrichtung Ofendeckel
- 46: Stell- und Drosseleinrichtung Gefäßunterteil
- 47: Zuluftleitung
- 48: Stell- und Drosseleinrichtung Zuluftleitung

- 49: Stell- und Drosseleinrichtung Verbindungsleitung
- 50: Meß- und Regeleinrichtung
- 51: Druckfühler
- 52: Temperaturfühler
- 60: Zuführeinrichtung von Sekundärenergie
- 61: Zusatzbrenner
- 70: Gaslieferant
- A: Fläche Gefäßoberteil
- B: Fläche Gefäßunterteil
- C: Ringteilfläche Gefäßunterteil
- D: Durchmesser Gefäßoberteil
- I: Ofenkippachse
- II: Ofenlängsachse

## Patentansprüche

1. Lichtbogenofen zum Schmelzen von Metallen, insbesondere von Schrott, bestehend aus einem Gefäßunterteil sowie einem Gefäßoberteil, das mit einem Deckel verschlossen ist und das mit einer Absaugeinrichtung in Verbindung steht, die über mit Stell- und Drosselvorrichtungen ausgestatteten Zuleitungen an den Lichtbogen angeschlossen ist,
wobei eine vom Durchmesser (D) des Kühlmantels (21) des rohrförmigen Gefäßoberteils (20) umfaßte Grundfläche (A) kleiner ist als eine mindestens an einer Seite auskragende Fläche (B) des mit einer feuerfest Auskleidung (32) versehenen Gefäßunterteils (30),
eine die Grundfläche (A) des Kühlenmantels (21) überkragende Ringteilfläche (C) des Gefäßunterteils (30) mit einer Abdeckung (36) verschlossen ist,
an der Abdeckung (36) eine mit Stell- und Drosseleinrichtungen (46) versehene Anschlußleitung (38) vorgesehen ist,
an dem das Gefäßoberteil (20) abschließenden Deckel (22) eine Anschlußleitung (39) vorgesehen ist, und
die Anschlußleitung (38, 39) durch eine Verbindungsleitung (43) an die Absaugeinrichtung (40) angeschlossen sind.

2. Lichtbogenofen nach Anspruch 1,
dadurch gekennzeichnet,
daß der Deckel (22) einen vom Gefäßoberteil (20) wegweisenden Dom (29) aufweist, an dem die Anschlußleitung (39) der Absaugungseinrichtung (40) angeschlossen ist.

3. Lichtbogenofen nach Anspruch 1,
dadurch gekennzeichnet,
daß Anschlußleitung (38, 39) Stell- und Drosselorgane (45, 46) aufweisen, die mit einer Meß- und Regeleinrichtung (50) in Verbindung stehen und durch die eine Umschaltung der Absaugung vom Gefäßunterteil (30) zum Gefäßoberteil (20) und umgekehrt erfolgt.

4. Lichtbogenofen nach Anspruch 1,
dadurch gekennzeichnet,
daß am Deckel (22) eine Gaszufuhrleitung (26) vorgesehen ist, die eine Stell- und Drosseleinrichtung (27) aufweist und die mit einem Gaslieferanten (70) in Verbindung steht.

5. Lichtbogenofen nach Anspruch 1,
dadurch gekennzeichnet,
daß an die Verbindungsleitung (43) in Strömungsrichtung nach der Stell- und Drosselvorrichtung (49) eine Zuluftleitung (47) angeschlossen ist, die Stell- und Drosseleinrichtungen (48) aufweist, mit denen die Zuluft mengenmäßig einstellbar ist.

6. Lichtbogenofen nach einem der oben genannten Ansprüche,
dadurch gekennzeichnet,
daß eine mit den Stell- und Drosselvorrichtungen (26, 45, 46, 48 und 49) in Verbindung stehende Meß- und Regeleinrichtung (50) vorgesehen ist, mit der die Richtung und das Volumen der Gase, Stäube und Dämpfe beeinflußbar ist.

7. Lichtbogenofen nach Anspruch 6,
dadurch gekennzeichnet,
daß die Meß- und Regeleinrichtung (50) mit einem im oberen Bereich des Gefäßoberteils (20) angeordneten Druckfühler (51) meßtechnisch verbunden ist.

8. Lichtbogenofen nach Anspruch 6,
dadurch gekennzeichnet,
daß die Meß- und Regeleinrichtung (50) mit einem in der Verbindungsleitung (43) zwischen der Zuluftleitung (47) und dem Filter (44) angeordneter Temperaturfühler (52) meßtechnisch verbunden ist.

9. Lichtbogenofen nach Anspruch 1,
dadurch gekennzeichnet,
daß das Gefäßoberteil (20) ein Volumen aufweist, daß mindestens eine Zweikorbchargierung zulässt.

10. Lichtbogenofen nach Anspruch 9,
dadurch gekennzeichnet,
daß am Gefäßoberteil (20) verteilt Zusatzbrenner (61) einer Zuführeinrichtung (60) von Sekundärenergie vorgesehen ist.

## Claims

1. An arc furnace for melting metals, in particular scrap, consisting of a lower vessel section and an upper vessel section, which is closed by a cover and is connected to a suction removal means, which is connected to the arc furnace by means of feed lines equipped with adjusting and throttle devices, wherein a base surface (A) comprised by the diameter (D) of the cooling jacket (21) of the tubular upper vessel section (20) is smaller than a surface (B), projecting at least on one side, of the lower vessel section (30) which is provided with a refractory lining (32),
an annular sectional surface (C) of the lower vessel section (30) which projects across the base surface (A) of the cooling jacket (21) is closed by a covering means (36),
a connection line (38) provided with adjusting and throttle means (46) is provided on the covering means (36),
a connection line (39) is provided on the cover (22) which closes off the upper vessel section (20), and the connection lines (38, 39) are connected to the suction removal means (40) by a connecting line (43).

2. An arc furnace according to Claim 1, characterised in that the cover (22) has a dome (29) which faces away from the upper vessel section (20), to which the connection line (39) of the suction removal means (40) is connected.

3. An arc furnace according to Claim 1, characterised in that the connection lines (38, 39) have adjusting and throttle members (45, 46) which are connected to a measuring and regulating means (50) and by means of which switching of the suction removal from the lower vessel section (30) to the upper vessel section (20) and vice versa takes place.

4. An arc furnace according to Claim 1, characterised in that a gas supply line (26) is provided on the cover (22), which line has an adjusting and throttle means (27) and which communicates with a gas delivery means (70).

5. An arc furnace according to Claim 1, characterised in that an incoming-air line (47) is connected to the connecting line (43) in the direction of flow after the adjusting and throttle device (49), which line has adjusting and throttle means (48) by means of which the quantity of incoming air can be adjusted.

6. An arc furnace according to one of the above claims, characterised in that a measuring and regulating means (50) which is connected to the adjusting and throttle devices (26, 45, 46, 48 and 49) is provided, by means of which the direction and the volume of the gases, dusts and vapours can be influenced.

7. An arc furnace according to Claim 6, characterised in that the measuring and regulating means (50) is connected for measuring purposes to a pressure sensor (51) located in the upper region of the upper vessel section (20).

8. An arc furnace according to Claim 6, characterised in that the measuring and regulating means (50) is connected for measuring purposes to a temperature sensor (52) located in the connecting line (43) between the incoming-air line (47) and the filter (44).

9. An arc furnace according to Claim 1, characterised in that the upper vessel section (20) has a volume which permits at least dual-basket charging.

10. An arc furnace according to Claim 9, characterised in that auxiliary burners (61) of a supply means (60) for secondary energy are provided, distributed on the upper vessel section (20).

## Revendications

1. Four à arc pour fondre des métaux, en particulier des ferrailles, constitué d'une partie inférieure de récipient ainsi que d'une partie supérieure de récipient, qui est fermée par un couvercle et qui est en liaison avec un dispositif d'aspiration qui est raccordé à l'arc électrique par l'intermédiaire de conduits équipés de dispositifs de réglage et d'obturation, une surface de base (A) contenue par le diamètre (D) de l'enveloppe de refroidissement (21) de la partie supérieure de récipient tubulaire (20) étant plus petite qu'une surface (B) en saillie au moins d'un côté de la partie inférieure de récipient (30) muni d'un revêtement réfractaire (32), une surface partielle annulaire (C), en saillie par rapport à la surface de base (A) de l'enveloppe de refroidissement (21), de la partie inférieure du récipient (30) étant fermée par un couvercle (36), un conduit de raccordement (38) muni de moyens de réglage et d'obturation (46) étant prévu sur le couvercle (36), un conduit de raccordement (39) étant prévu sur le couvercle (22) fermant la partie supérieure de récipient (20), et les conduits de raccordement (38,39) étant raccordés par un conduit de liaison (43) au dispositif d'aspiration (40).

2. Four à arc selon la revendication 1,
caractérisé en ce que le couvercle (22) présente un dôme (29) en regard de la partie supérieure de récipient (20), auquel est raccordé le conduit de raccordement (39) du dispositif d'aspiration (40).

3. Four à arc selon la revendication 1,
caractérisé en ce que les conduits de raccordement (38,39) présentent des organes de réglage et d'obturation (45,46), qui sont reliés à un dispositif de mesure et de réglage (50) et grâce auxquels un passage de l'aspiration de la partie inférieure de récipient (30) à la partie supérieure de récipient (20), et inversement, est effectué.

4. Four à arc selon la revendication 1,
caractérisé en ce que, sur le couvercle (22), il est prévu un conduit d'amenée de gaz (26) qui présente un dispositif de réglage et d'obturation (27) et qui est relié à un fournisseur de gaz (70).

5. Four à arc selon la revendication 1,
caractérisé en ce qu'un conduit d'air amené (47) est raccordé au conduit de liaison (43) dans la direction d'écoulement après le dispositif de réglage et d'obturation (49), conduit qui présente les dispositifs de réglage et d'obturation (48) grâce auxquels la quantité d'air amené peut être réglée.

6. Four à arc selon une des revendications précitées,
caractérisé en ce qu'il est prévu un dispositif de mesure et de réglage (50) relié aux dispositifs de réglage et d'obturation (26,45,46,48 et 49), grâce auquel la direction et le volume des gaz, poussières et vapeurs peuvent être influencés.

7. Four à arc selon la revendication 6,
caractérisé en ce que le dispositif de mesure et de réglage (50) est relié, par une technique de mesure, à un capteur de pression (51) agencé dans la zone supérieure de la partie supérieure de récipient (20).

8. Four à arc selon la revendication 6,
caractérisé en ce que le dispositif de mesure et de réglage (50) est relié, par une technique de mesure, à un capteur de température (52) agencé dans le conduit de liaison (43) entre le conduit d'air amené (47) et le filtre (44).

9. Four à arc selon la revendication 1,
caractérisé en ce que la partie supérieure de récipient (20) présente un volume qui autorise au moins un chargement à deux paniers.

10. Four à arc selon la revendication 9,
caractérisé en ce que des brûleurs auxiliaires (61), répartis sur la partie supérieure de récipient (20), d'un dispositif d'amenée (60) d'énergie secondaire sont prévus.
